(19) Europäisches Patentamt
European Patent Office
Office européen des brevets

(11) **EP 1 068 695 B1**

(12) **FASCICULE DE BREVET EUROPEEN**

(45) Date de publication et mention
de la délivrance du brevet:
**14.04.2010 Bulletin 2010/15**

(51) Int Cl.:
***H04L 9/06*** *(2006.01)* ***H04L 9/30*** *(2006.01)*

(21) Numéro de dépôt: **00902703.8**

(86) Numéro de dépôt international:
**PCT/FR2000/000258**

(22) Date de dépôt: **03.02.2000**

(87) Numéro de publication internationale:
**WO 2000/046953 (10.08.2000 Gazette 2000/32)**

(54) **PROCEDE DE SECURISATION D'UN ENSEMBLE ELECTRONIQUE DE CRYPTOGRAPHIE A CLE SECRETE CONTRE LES ATTAQUES PAR ANALYSE PHYSIQUE**

VERFAHREN ZUR SICHERUNG EINER ELEKTRONISCHEN VERSCHLÜSSELUNGSVORRICHTUNG MIT GEHEIMSCHLÜSSEL GEGEN ANGRIFFE MITTELS PHYSISCHER ANALYSE

METHOD FOR PROTECTING AN ELECTRONIC CRYPTOGRAPHIC SET WITH SECRET KEY AGAINST CRYPTANALYTICAL ATTACK

(84) Etats contractants désignés:
**AT BE CH CY DE DK ES FI FR GB GR IE IT LI LU MC NL PT SE**

(30) Priorité: **04.02.1999 FR 9901289**

(43) Date de publication de la demande:
**17.01.2001 Bulletin 2001/03**

(73) Titulaire: **CP8 TECHNOLOGIES**
**78431 Louveciennes (FR)**

(72) Inventeurs:
• **PATARIN, Jacques**
**F-78220 Viroflay (FR)**

• **GOUBIN, Louis**
**F-75015 Paris (FR)**

(74) Mandataire: **Cassagne, Philippe M.J. et al Gemalto SA**
**Intellectual Property Department**
**6 Rue de la Verrière**
**92197 Meudon Cedex (FR)**

(56) Documents cités:
**WO-A-98/52319**

**Description**

La présente invention concerne un procédé de sécurisation d'un ensemble électronique mettant en oeuvre un algorithme cryptographique qui utilise une clé secrète. Plus précisément, le procédé vise à réaliser une version de l'algorithme qui ne soit pas vulnérable face à un certain type d'attaques physiques - dites *Differential Power* Analysis ou *High-Order* Differential *Power Analysis* - qui cherchent à obtenir des informations sur la clé secrète à partir de l'étude de la consommation électrique de l'ensemble électronique au cours de l'exécution du calcul.

Les algorithmes cryptographiques considérés ici utilisent une clé secrète pour calculer une information de sortie en fonction d'une information d'entrée ; il peut s'agir d'une opération de chiffrement, de déchiffrement ou de signature ou de vérification de signature, ou d'authentification ou de non-répudiation. Ils sont construits de manière à ce qu'un attaquant, connaissant les entrées et les sorties, ne puisse en pratique déduire aucune information sur la clé secrète elle-même.

WO 98/52319 décrit une méthode permettant de protéger l'algorithme RSA-CRT.

Les attaques de type Analyse de Puissance Electrique, Power Analysis en langage anglo-saxon, développées par Paul Kocher et Cryptographic Research (Confer document Introduction to Differential Power Analysis and related Attacks by Paul Kocher, Joshua Jaffe, and Benjamin Jun, Cryptography Research, 870 Market St., Suite 1008, San Francisco, CA 94102, édition du document HTML à l'adresse URL : http://www.cryptography.com/dpa/technical/index.html), partent de la constatation qu'en réalité l'attaquant peut acquérir des informations, autres que la simple donnée des entrées et des sorties, lors de l'exécution du calcul, comme par exemple la consommation électrique du microcontrôleur ou le rayonnement électromagnétique émis par le circuit.

L'analyse d'énergie électrique différentielle, *Differential* Power *Analysis* en langage anglo-saxon, en abrégé DPA, est une attaque permettant d'obtenir des informations sur la clé secrète contenue dans l'ensemble électronique, en effectuant une analyse statistique des enregistrements de consommation électrique effectués sur un grand nombre de calculs avec cette même clé.

On considère, à titre d'exemple non limitatif, le cas de l'algorithme DES (*Data Encryption Standard*), dont on peut trouver une description dans l'un des documents suivants :

- FIPS PUB 46-2, *Data Encryption Standard,* 1994;
- FIPS PUB 74, *Guidelines for Implementing and Using the NBS Data Encryption Standard,* 1981;
- ANSI X3.92, *American National Standard, Data Encryption Algorithm,* 1981;
- ISO/IEC 8731:1987, *Banking - Approved Algorithms for Message Authentication - Part 1: Data Encryption Algorithm (DEA).*

ou encore dans l'ouvrage suivant :

■ Bruce Schneier, Applied Cryptography, 2ème édition, John Wiley & Sons, 1996, page 270.

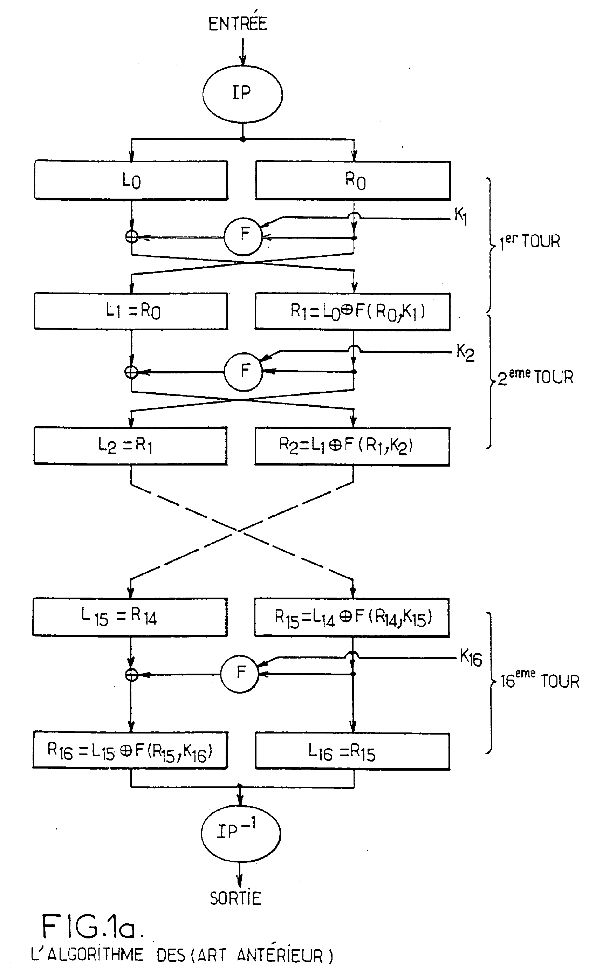

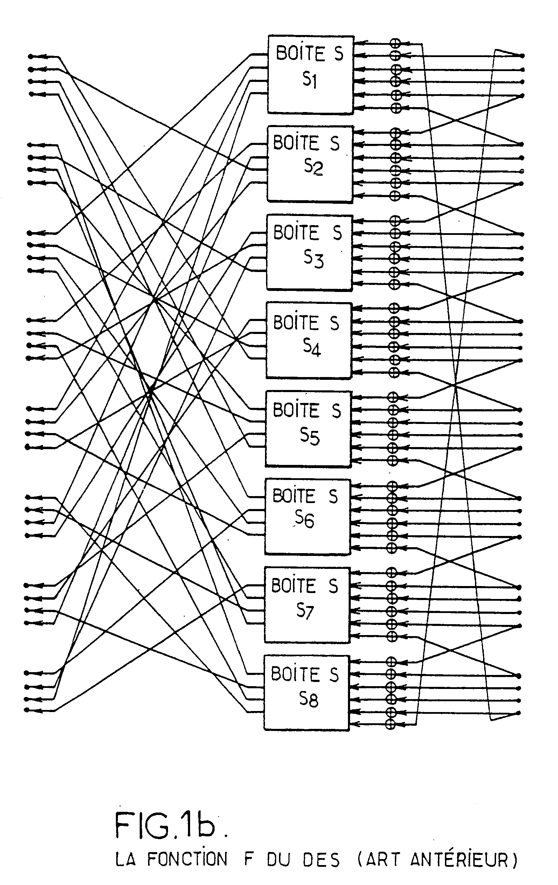

L'algorithme DES se déroule en 16 étapes appelées tours, confer figure 1a. Dans chacun des 16 tours, une transformation *F* est effectuée sur 32 bits. Cette transformation *F* utilise huit transformations non linéaires de 6 bits sur 4 bits, qui sont codées chacune dans une table appelée *boîte-S,* confer figure 1b, où les boîtes S sont notées $S_1$, $S_2$, ..., $S_8$.

L'attaque DPA sur le DES peut être mise en oeuvre de la manière suivante :

- <u>1ère étape</u> : On fait des mesures de consommation sur le premier tour, ceci pour 1000 calculs de DES. On note *E [1], ... , E[1000]* les valeurs d'entrée de ces 1000 calculs. On note *C[1], ..., C[1000]* les 1000 courbes correspondantes de consommation électrique mesurées lors de ces calculs. On calcule également la courbe *moyenne CM* des 1000 courbes de consommation.
- <u>2ème étape</u> : On s'intéresse, par exemple, au premier bit de sortie de la première boîte-S lors du premier tour. Notons b la valeur de ce bit. Il est facile de voir que b ne dépend que de 6 bits de la clé secrète. L'attaquant fait une hypothèse sur les 6 bits concernés. Il calcule - à partir de ces 6 bits et des *E[i]* - les valeurs théoriques attendues pour *b*. Cela permet de séparer les 1000 entrées *E[1], ..., E[1000]* en deux catégories : celles qui donnent *b=0*, et celles qui donnent *b=1.*
- <u>3ème étape</u> : On calcule maintenant la moyenne *CM'* des courbes correspondant à des entrées de la première catégorie, c'est-à-dire pour lesquelles *b=0*. Si *CM* et *CM'* présentent une différence notable, on considère que les valeurs retenues pour les 6 bits de clé étaient les bonnes. Si *CM* et *CM'* ne présentent pas de différence sensible, au sens statistique, c'est-à-dire pas de différence nettement supérieure à l'écart type du bruit mesuré, on recommence la 2ème étape avec un autre choix pour les 6 bits.
- <u>4ème étape</u> : On répète les étapes 2 et 3 avec un bit cible b issu de la deuxième boîte-S, puis de la troisième boîte-S, ..., jusqu'à la huitième boîte-S. On obtient donc finalement 48 bits de la clé secrète.

- 5ème étape : Les 8 bits restants peuvent être trouvés par recherche exhaustive.

Cette attaque ne nécessite aucune connaissance sur la consommation électrique individuelle de chaque instruction, ni sur la position dans le temps de chacune de ces instructions. Elle s'applique de la même manière si on suppose que l'attaquant connaît des sorties de l'algorithme et les courbes de consommation correspondantes. Elle repose uniquement sur l'hypothèse fondamentale selon laquelle :

*Hypothèse fondamentale* : *Il existe une variable intermédiaire, apparaissant dans le cours du calcul de l'algorithme, telle que la connaissance de quelques bits de clé, en pratique moins de 32 bits, permet de décider si deux entrées, respectivement deux sorties, donnent ou non la même valeur pour cette variable.*

Tous les algorithmes utilisant des boites-S, tels le DES, sont potentiellement vulnérables à la DPA, car les modes de réalisation usuels restent en général dans le cadre de l'hypothèse mentionnée ci-dessus.

Les attaques dites par analyse d'énergie électrique de haut niveau, *High-Order Differential Power Analysis* en langage anglo-saxon, en abrégé HO-DPA, sont une généralisation de l'attaque DPA décrite précédemment. Elles peuvent utiliser plusieurs sources d'information différentes, outre la consommation elles peuvent mettre en jeu les mesures de rayonnement électromagnétique, de température, etc. et mettre en oeuvre des traitements statistiques plus sophistiqués que la simple notion de moyenne, des variables intermédiaires (généralisant le bit b défini ci-dessus) moins élémentaires. Néanmoins, elles reposent exactement sur la même hypothèse fondamentale que la DPA.

Le procédé, objet de la présente invention, a pour objet la suppression des risques d'attaques DPA ou HO-DPA d'ensembles ou systèmes électroniques de cryptographie à clé secrète.

Un autre objet de la présente invention est en conséquence une modification du processus de calcul cryptographique mis en oeuvre par les systèmes électroniques de cryptographie protégés de manière que l'hypothèse fondamentale précitée ne soit plus vérifiée, à savoir qu'aucune variable intermédiaire ne dépend de la consommation d'un sous-ensemble aisément accessible de la clé secrète, les attaques de type DPA ou HO-DPA étant ainsi rendues inopérantes.

Le procédé de sécurisation d'un ensemble électronique mettant en oeuvre un processus de calcul cryptographique classique qui utilise une clé secrète, objet de la présente invention, est remarquable en ce que l'on divise le processus de calcul cryptographique en plusieurs parties de calcul distinctes conduites parallèlement et mettant en oeuvre des résultats partiels intermédiaires distincts de ceux du calcul cryptographique classique et que l'on reconstitue la valeur finale, obtenue par le calcul classique en l'absence de division, à partir des résultats partiels intermédiaires distincts. Par processus de calcul cryptographique classique, on entend tout processus de calcul séquentiel ou successif permettant d'obtenir des valeurs chiffrées, déchiffrées, des valeurs de signature, de vérification de signature, d'authentification et de non-répudiation. Un tel procédé permet d'inhiber les attaques de type DPA ou HO-DPA contre les ensembles ou systèmes embarqués munis de fonctions de calcul cryptographique tels que les cartes à microcalculateurs dédiées à des fonctions de monétique électronique, carte bancaire, carte de contrôle d'accès ou analogues.

Il sera mieux compris à la lecture de la description et à l'observation des dessins ci-après dans lesquels, outre les figures 1a et 1b relatives à l'art antérieur en référence au processus de chiffrement/ déchiffrement DES pour *"Data Encryption System"* en langage anglo-saxon :

- la figure 2 représente un organigramme général illustratif du procédé objet de l'invention ;
- la figure 3a représente, de manière illustrative, un mode de mise en oeuvre non limitatif du procédé objet de la présente invention ;
- la figure 3b représente, à titre d'exemple illustratif, un organigramme d'une mise en oeuvre particulière du procédé objet de l'invention appliqué à une transformation non linéaire utilisée dans un processus de calcul cryptographique classique tel que le DES ;
- la figure 3c représente une variante de mise en oeuvre du procédé objet de l'invention tel qu'illustré en figure 2 ;
- la figure 3d représente, à titre d'exemple illustratif, un organigramme d'une autre mise en oeuvre particulière du procédé objet de l'invention, à partir d'une transformation bijective secrète, appliqué à une transformation non linéaire utilisée dans un processus de calcul cryptographique classique tel que le DES ;
- la figure 3e représente, à titre d'exemple illustratif, un organigramme d'une autre mise en oeuvre particulière du procédé objet de l'invention, à partir de fonctions polynomiales, appliqué à une transformation non linéaire utilisée dans un processus de calcul cryptographique classique tel que le DES.

Une description plus détaillée du procédé de sécurisation d'un ensemble électronique mettant en oeuvre un processus de calcul cryptographique classique qui utilise une clé secrète, objet de la présente invention, sera maintenant donnée en liaison avec les figures précitées.

D'une manière générale, le procédé objet de la présente invention consiste, pour un processus de calcul cryptographique classique qui utilise une clé secrète Ks, à modifier le processus de calcul cryptographique de manière que l'hypothèse fondamentale précitée ne soit plus vérifiée, aucune variable intermédiaire calculée ne dépendant plus, conformément au procédé objet de la présente invention, de la connaissance d'un sous-ensemble aisément accessible de la clé secrète.

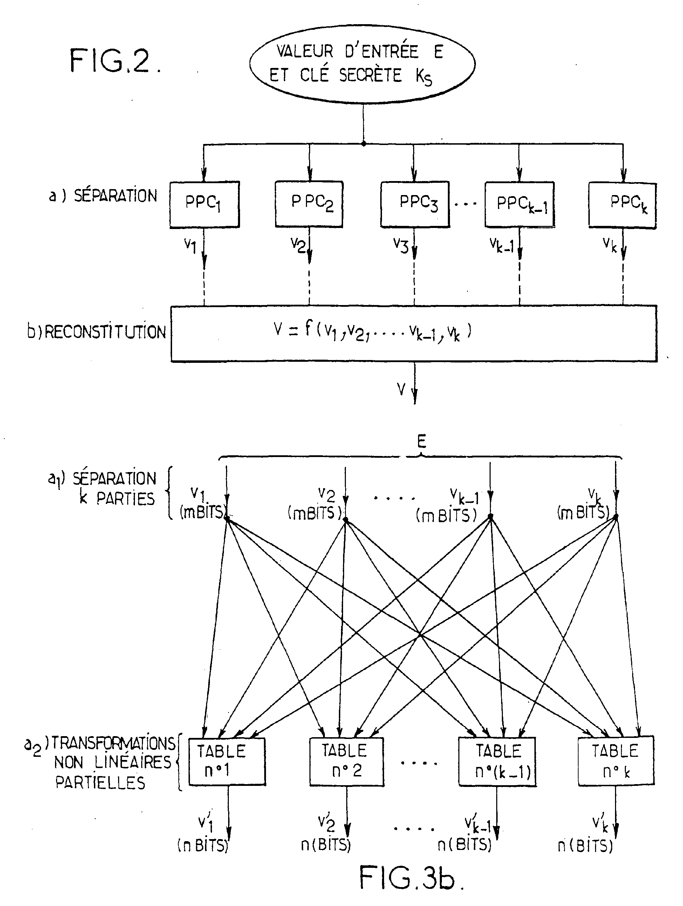

Dans ce but, et conformément au procédé objet de la présente invention tel que représenté en figure 2, a) on divise le processus de calcul cryptographique classique en plusieurs parties de processus de calcul $PPC_1$ à $PPC_k$ distinctes conduites parallèlement, puis b) on reconstitue la valeur finale V correspondant à celle obtenue par le calcul cryptographique classique, en l'absence de division, à partir des résultats partiels intermédiaires distincts $V_1$ à $V_k$ obtenus par la mise en oeuvre des parties de processus de calcul distinctes $PPC_1$ à $PPC_k$ précitées.

Ainsi, les parties de processus de calcul sont indépendantes mais les variables ou résultats intermédiaires partiels sont liés.

On réalise cette division en remplaçant chaque variable $v$ intermédiaire, intervenant dans le cours du calcul et dépendant des données d'entrée (ou de sortie), par $k$ variables $v_1$, $v_2$, ... , $v_k$, telles que $v_1$, $v_2$, ... , et $v_k$ permettent, au besoin, de reconstituer v. Plus précisément, cela signifie qu'il existe une fonction $f$ telle que $v=f(v_1, v_2, ..., v_k)$. On indique en outre que $f$ satisfait, de préférence, la condition suivante :

Condition n°1 :

Soit i un indice compris, au sens large, entre $1$ et $k$. La connaissance d'une valeur $v$ ne permet jamais en pratique de déduire des informations sur l'ensemble des valeurs $v_i$ telles qu'il existe un $(k-1)$ -uplet $(v_1, ..., v_{i-1}, v_{i+1}, ..., v_k)$ satisfaisant l'équation $f(v_1, ..., v_k)=v$ ;

Exemple n°1 :

Si on prend comme fonction $f(v_1, ..., v_k) = v_1 \oplus v_2 \oplus ... \oplus v_k$, où $\oplus$ désigne la fonction "OU-exclusif" bit à bit, la condition n°1 est réalisée de manière manifeste, car, pour tout indice i compris entre $1$ et $k$, l'ensemble considéré des valeurs $v_i$ contient toutes les valeurs possibles, et ne dépend donc pas de $v$.

Exemple n°2 :

Si on considère une variable $v$ à valeurs dans le groupe multiplicatif de $Z/nZ$, c'est-à-dire l'ensemble des entiers modulo n qui possèdent un inverse, également modulo n, on peut prendre comme fonction $f(v_1, ..., v_k) = v_1 \cdot v_2 ... v_k$ mod n, où les nouvelles variables $v_1$, $v_2$, ..., $v_k$ sont également à valeurs dans le groupe multiplicatif de $Z/nZ$. La condition n°1 est aussi réalisée de manière manifeste, car, pour tout indice $i$ compris entre $l$ et $k$, l'ensemble considéré des valeurs $v_i$ contient toutes les valeurs possibles, et ne dépend donc pas de $v$.

Conformément à un aspect remarquable du procédé objet de l'invention, on effectue alors une *"traduction"* de l'algorithme en remplaçant chaque variable intermédiaire $v$ dépendant des données d'entrée (ou de sortie) par les $k$ variables $v_1$, $v_2$, ... , $v_k$. Pour garantir la sécurité maximale de l'algorithme modifié sous sa nouvelle forme, on impose la condition supplémentaire suivante sur la fonction $f$ :

Condition n°2 :

La fonction $f$ est telle que les transformations à effectuer sur $v_1$, $v_2$, ..., ou $v_k$ au cours du calcul, à la place des transformations effectuées habituellement sur $v$, peuvent être exécutées sans avoir à recalculer $v$.

**Premier exemple** : le DES

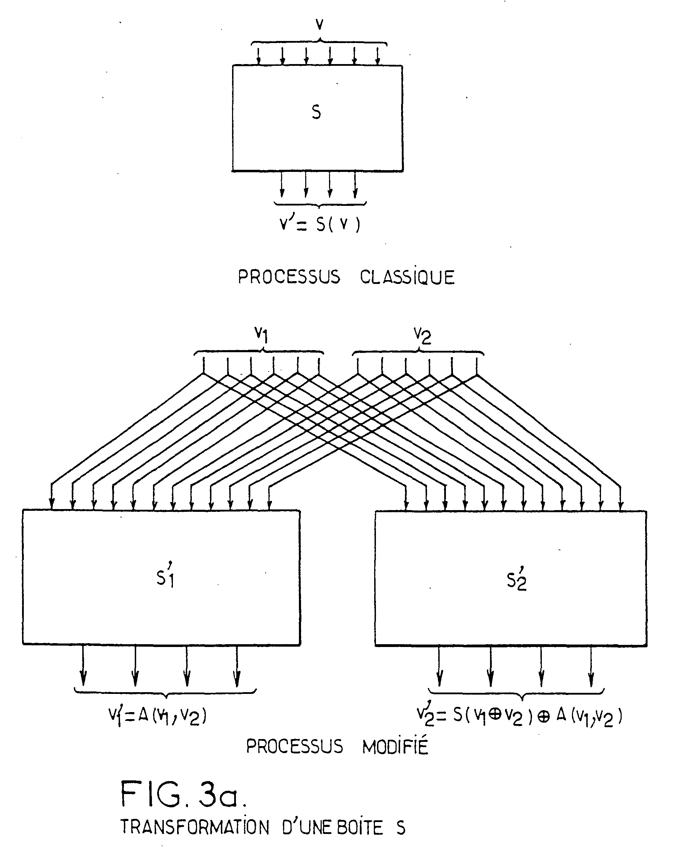

Un premier exemple concernant la sécurisation du DES sera décrit en liaison avec la figure 3a.

Dans cet exemple, on considère le cas particulier du DES. On choisit ici une division de chaque variable $v$ intermédiaire, intervenant dans le cours du calcul et dépendant des données d'entrée, ou de sortie, en deux variables $v_1$ et $v_2$, c'est-à-dire que l'on prend $k=2$. On considère la fonction $f(v_1, v_2) = v = v_1 \oplus v_2$ de l'exemple n°1 ci-dessus, qui satisfait par construction la condition n°1. Par construction de l'algorithme, on constate facilement que les transformations qu'il effectue sur $v$ peuvent toujours entrer dans l'une des cinq catégories suivantes :

- permutation des bits de $v$ ;
- expansion des bits de $v$ ;
- OU-exclusif de $v$ avec une autre variable $v'$ du même type ;
- OU-exclusif de $v$ avec une variable c dépendant uniquement de la clé ou d'une sous-clé ;

**4**

- transformation non linéaire de *v* par une boîte-S.

Les deux premières catégories correspondent à des transformations linéaires sur les bits de la variable *v*. Pour celles-ci, la condition n°2 est donc très facile à vérifier : il suffit, à la place de la transformation effectuée habituellement sur *v,* d'effectuer la permutation ou l'expansion sur $v_1$, puis sur $v_2$, et la relation $f(v_1, v_2) = v$ qui était vraie avant la transformation reste vraie également après.

De même, dans le troisième cas, il suffit de remplacer le calcul de $v'' = v \oplus v'$ par celui de $v''_1 = v_1 \oplus v'_1$ et de $v''_2 = v_2 \oplus v'_2$. Les relations $f(v_1, v_2) = v$ et $f(v'_1, v'_2) = v'$ donnent bien $f(v''_1, v''_2) = v''$, et la condition n°2 est encore vérifiée.

En ce qui concerne le OU-exclusif de *v* avec une variable *c* dépendant uniquement de la clé ou d'une sous-clé, la condition n°2 est aussi très facile à satisfaire : il suffit de remplacer le calcul de $v \oplus c$ par $v_1 \oplus c$, ou $v_2 \oplus c$, ce qui assure la condition n°2.

Enfin, à la place de la transformation non-linéaire *v'=S(v),* donnée sous la forme d'une boîte-S, qui dans cet exemple admet des entrées de 6 bits et donne des sorties de 4 bits, on réalise la transformation $(v'_1, v'_2) = S'(v_i, v_2)$ au moyen de deux nouvelles boîtes S, chacune étant cette fois de 12 bits sur 4 bits. Pour garantir l'égalité $f(v'_1, v'_2) = v'$, il suffit de choisir:

$$(v'_1, \ v'_2) \ = \ S'(v_1, \ v_2) \ = \ (\ A(v_1, \ v_2), \ S(v_1 \oplus v_2) \ \oplus \ A(v_1, \ v_2)\ )$$

c'est-à-dire $v'_1 = A(v_1, v_2)$ et $v'_2 = S(v_1 \oplus v_2) \oplus A(v_1, v_2)$

où A désigne une transformation *aléatoire* et *secrète* de 12 bits vers 4 bits. La première (nouvelle) boîte-S correspond à la table de la transformation $(v_1, v_2) \rightarrow A(v_1, v_2)$ qui à $(v_1, v_2)$ associe $A(v_1, v_2)$ et la seconde (nouvelle) boîte-S correspond à la table de la transformation $(v_1, v_2) \rightarrow S(v_1 \oplus v_2) \oplus A(v_1, v_2)$ qui à $(v_1, v_2)$ associe $S(v_1 \oplus v_2) \oplus A(v_1, v_2)$. La présence de la fonction aléatoire A permet de garantir la condition n°1. L'utilisation de tables permet par ailleurs d'éviter d'avoir à calculer $v_1 \oplus v_2$ et, par là, permet de satisfaire la condition n°2.

Les tables de transformation ou de conversion peuvent être mémorisées dans une mémoire ROM de la carte à microcalculateur lorsque l'ensemble électronique est constitué par une carte à microcalculateur.

Ainsi, pour une étape de calcul du type transformation non linéaire mise en oeuvre par un processus de calcul cryptographique classique tel que le DES, la division, ainsi que représenté en figure 3b, peut être effectuée en k parties. Pour un processus de calcul cryptographique classique utilisant des transformations non linéaires de m bits sur n bits, décrites par des tables de conversion dans lesquelles les n bits de sortie de la transformation sont lus à une adresse fonction des m bits d'entrée, on remplace chaque transformation non linéaire appliquée à une variable intermédiaire jouant le rôle de variable d'entrée E du processus de calcul cryptographique classique, en l'absence de division, par une transformation non linéaire partielle de km bits sur kn bits appliquée à l'ensemble des variables intermédiaires partielles $v_1$ à $v_k$. Selon un aspect particulièrement remarquable du procédé objet de l'invention, cette transformation non linéaire partielle est décrite et réalisée par k tables de conversion partielle dans lesquelles les n bits de sortie $v'_1$ ou $v'_2$ ... ou $v'_k$ de la transformation sont lus à une adresse fonction des km bits d'entrée.

Dans le premier exemple précité et en relation avec la figure 3b, on indique que k=2, n=4 et m=6.

**<u>Variante n°1 :</u>**

Pour des raisons d'encombrement de la ROM, on peut tout à fait utiliser la même fonction aléatoire A pour chacune des huit boîtes S de la description classique du DES, ce qui permet de n'avoir que neuf nouvelles boîtes-S à stocker au lieu de seize.

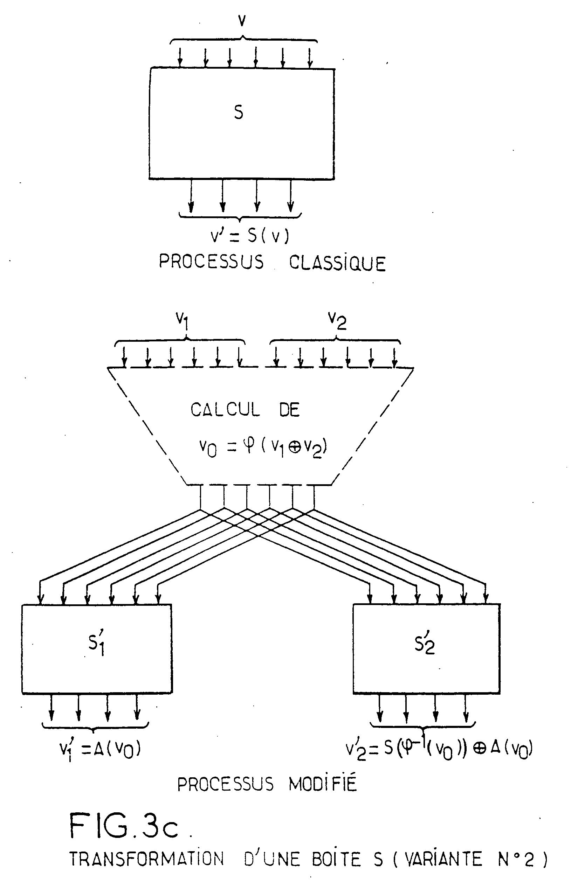

Une variante, variante n°2, sera décrite en liaison avec la figure 3c.

**<u>Variante n°2 :</u>**

Afin de réduire la taille de la ROM nécessaire pour stocker les boîtes S, on peut également utiliser la méthode suivante : à la place de chaque transformation non-linéaire *v'=S(v)* de l'implémentation initiale, donnée sous la forme d'une boîte-S (qui dans l'exemple du DES admet des entrées de 6 bits et donne des sorties de 4 bits), on réalise la transformation $(v'_1, v'_2) = S'(v_1, v_2)$ au moyen de deux boîtes S, chacune étant cette fois de 6 bits sur 4 bits. La mise en oeuvre initiale du calcul de *v'=S(v)* est remplacée par les deux calculs successifs suivants :

- $v_0 = \varphi(v_1 \oplus v_2)$
- $(v'_1, v'_2) = S'(v_1, v_2) = (A(v_0), S(\varphi^{-1}(v_0)) \oplus A(v_0))$ *c'est-à-dire* $v'_1 = A(v_0)$, $v'_2 = S(\varphi^{-1}(v_0)) \oplus A(v_0)$ où $\varphi$ est une fonction bijective et secrète de 6 bits sur 6 bits, et où A désigne une transformation aléatoire et secrète de 6 bits vers 4 bits. La première (nouvelle) boîte-S correspond à la table de la transformation $v_0 \rightarrow A(v_0)$ qui à $v_0$ associe $A(v_0)$ et la seconde (nouvelle) boîte-S correspond à la table de la transformation $v_0 \rightarrow S(\varphi^{-1}(v_0)) \oplus A(v_0)$ qui à $v_0$ associe $S(\varphi^{-1}(v_0)) \oplus A(v_0)$. Par construction, on a toujours l'égalité $f(v'_1, v'_2) = v'$. La présence de la fonction aléatoire A permet de garantir la condition n°1. L'utilisation de tables permet d'éviter d'avoir à calculer $\varphi^{-1}(v_0) = v_1 \oplus v_2$.

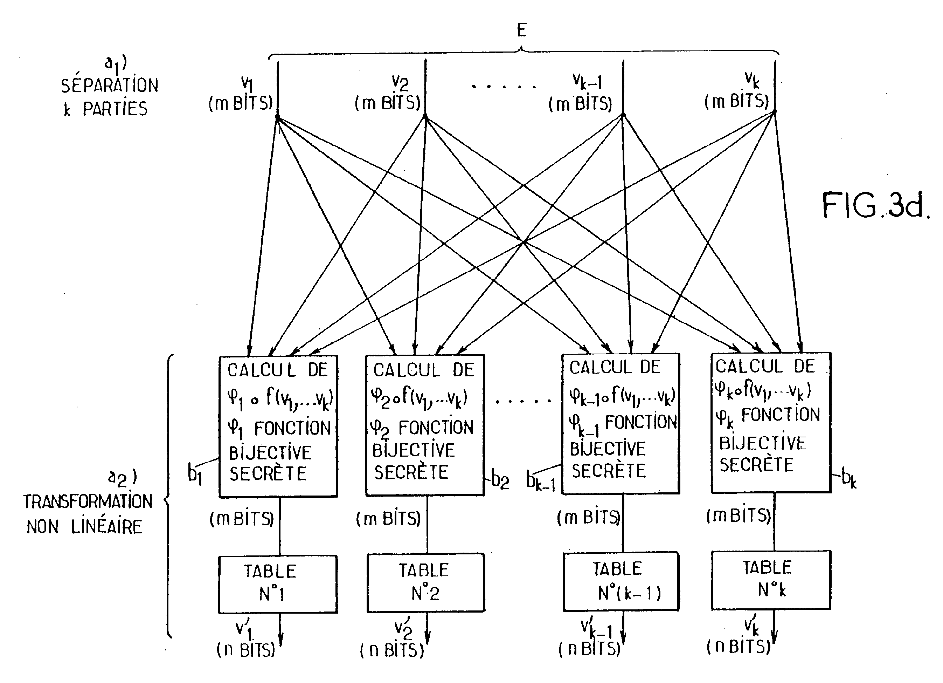

Sur la figure 3d, on a représenté une étape de calcul correspondante, de type transformation non linéaire mise en oeuvre dans le cadre du processus de calcul cryptographique classique tel que le DES, tel que modifié conformément au procédé objet de l'invention selon la Variante n°2. Outre la division en k parties appliquée à la variable d'entrée E, pour les transformations non linéaires de m bits sur n bits, décrites par des tables de conversion dans lesquelles les n bits de sortie sont lus à une adresse fonction des m bits d'entrée, on remplace chaque transformation non linéaire appliquée à une variable intermédiaire, jouant le rôle de variable d'entrée E, du processus de calcul classique par une transformation non linéaire partielle de km bits sur kn bits appliquée sur l'ensemble des variables intermédiaires partielles $v_1$ à $v_k$. Cette transformation non linéaire partielle est décrite et réalisée par k tables de conversion, chacune des entrées des tables de conversion recevant une valeur obtenue par application d'une fonction bijective secrète $\varphi_j$ à la fonction f $(v_1, ..., v_k)$ des variables intermédiaires partielles suivant la relation $\varphi_j$ o $f(v_1, ..., v_k)$, avec $j \in [1,k]$.

Selon un aspect particulièrement remarquable du procédé, objet de la présente invention, l'application précitée $\varphi_j$ o f $(v_1, ..., v_k)$ est effectuée par évaluation directe d'une valeur résultante, laquelle, appliquée à l'entrée de la table de conversion correspondante 1 à k, permet de lire n bits de sortie de la transformation $v'_1$ ou $v'_2$ ou ... $v'_k$ à une adresse qui est fonction de ces m bits d'entrée.

De même que dans le premier exemple précité, et en relation avec la figure 3d, on indique que pour la Variante n°2, k=2, m=6 et n=4.

En outre, et dans une version simplifiée, les fonctions bijectives $\varphi_1$ à $\varphi_k$ sont identiques.

Pour que la condition n°2 soit satisfaite, il reste à choisir la transformation bijective $\varphi$ ou des fonctions bijectives $\varphi_1$ à $\varphi_k$ de telle sorte que le calcul de $v_0 = \varphi(v_1 \oplus v_2)$ puisse se faire sans avoir à recalculer $v_1 \oplus v_2$. Deux exemples de choix pour la fonction $\varphi$ sont donnés ci-après :

Exemple 1 Une bijection $\varphi$ linéaire

On choisit pour $\varphi$ une fonction linéaire secrète et bijective de 6 bits sur 6 bits. Dans le cadre d'un tel choix, on considère l'ensemble des valeurs sur 6 bits comme un espace vectoriel de dimension 6 sur le corps fini $\boldsymbol{F}_2$ à deux éléments. En pratique, choisir $\varphi$ revient à choisir une matrice aléatoire et inversible de taille $6 \times 6$ dont les coefficients valent 0 ou 1. Avec ce choix de $\varphi$, il est facile de voir que la condition n°2 est satisfaite. En effet - pour calculer $\varphi(v_1 \oplus v_2)$ - il suffit de calculer $\varphi(v_1)'$ puis $\varphi(v_2)$, et enfin de calculer le "OU-exclusif" des deux résultats obtenus.

Par exemple, la matrice
$$\begin{pmatrix} 1 & 1 & 0 & 1 & 0 & 0 \\ 1 & 1 & 0 & 1 & 0 & 1 \\ 0 & 1 & 1 & 0 & 1 & 0 \\ 1 & 1 & 1 & 0 & 1 & 0 \\ 0 & 1 & 1 & 1 & 1 & 0 \\ 0 & 0 & 1 & 1 & 0 & 1 \end{pmatrix}$$
est inversible. Il lui correspond la bijection linéaire $\varphi$ de 6 bits sur 6 bits définie par :

$$\varphi(u_1, u_2, u_3, u_4, u_5, u_6) = (u_1 \oplus u_2 \oplus u_4, u_1 \oplus u_2 \oplus u_4 \oplus u_6, u_2 \oplus u_3 \oplus u_5, u_1 \oplus u_2 \oplus u_3 \oplus u_5, u_2 \oplus u_3 \oplus u_4 \oplus u_5, u_3 \oplus u_4 \oplus u_6)$$

Si on note $v_1 = (v_{1,1}, v_{1,2}, v_{1,3}, v_{1,4}, v_{1,5}, v_{1,6})$ et $v_2 = (v_{2,1}, v_{2,2}, v_{2,3}, v_{2,4}, v_{2,5}, v_{2,6})$, pour calculer $\varphi(v_1 \oplus v_2)$, on calcule successivement :

- $\varphi(v_1) = (v_{1,1} \oplus v_{1,2} \oplus v_{1,4}, v_{1,1} \oplus v_{1,2} \oplus v_{1,4} \oplus v_{1,6}, v_{1,2} \oplus v_{1,3} \oplus v_{1,5}, v_{1,1} \oplus v_{1,2} \oplus v_{1,3} \oplus v_{1,5}, v_{1,2} \oplus v_{1,3} \oplus v_{1,4} \oplus v_{1,5}, v_{1,3} \oplus v_{1,4} \oplus v_{1,6})$ ;

- $\varphi(v_2)=(v_{2,1} \oplus v_{2,2} \oplus v_{2,4}, v_{2,1} \oplus v_{2,2} \oplus v_{2,4} \oplus v_{2,6}, v_{2,2} \oplus v_{2,3} \oplus v_{2,5}, v_{2,1} \oplus v_{2,2} \oplus v_{2,3} \oplus v_{2,5}, v_{2,2} \oplus v_{2,3} \oplus v_{2,4} \oplus v_{2,5}, v_{2,3} \oplus v_{2,4} \oplus v_{2,6})$.

Puis on calcule le *"OU-exclusif"* des deux résultats obtenus.

Exemple 2 : Une bijection φ quadratique

On choisit pour φ une fonction quadratique secrète et bijective de 6 bits sur 6 bits. Le terme "quadratique" signifie ici que chaque bit de valeur de sortie de la fonction φ est donné par une fonction polynomiale de degré deux des 6 bits d'entrée, qui sont identifiés à 6 éléments du corps fini $F_2$. En pratique, on peut choisir la fonction φ définie par la formule $\varphi(x)=t(s(x)^5)$, où $s$ est une application linéaire secrète et bijective de $(F_2)^6$ sur $L$, $t$ est une application linéaire secrète et bijective de $L$ sur $(F_2)^6$, et où $L$ désigne une extension algébrique de degré 6 du corps fini $F_2$. Le caractère bijectif de cette fonction φ résulte du fait que $a \rightarrow a^5$ est une bijection sur l'extension $L$ (dont l'inverse est $b \rightarrow b^{38}$). Pour établir que la condition n°2 est encore satisfaite, il suffit de remarquer que l'on peut écrire :

$$\varphi(v_1 \oplus v_2) = \psi(v_1, v_1) \oplus \psi(v_1, v_2) \oplus \psi(v_2, v_1) \oplus \psi(v_2, v_2)$$

où la fonction ψ est définie par : $\psi(x, y)=t(s(x)^4 . s(y))$.

Par exemple, si on identifie $L$ à $F_2[X]/(X^6+X+1)$, et si on prend s et t de matrices respectives

$$\begin{pmatrix} 1 & 1 & 0 & 1 & 0 & 0 \\ 1 & 1 & 0 & 1 & 0 & 1 \\ 0 & 1 & 1 & 0 & 1 & 0 \\ 1 & 1 & 1 & 0 & 1 & 0 \\ 0 & 1 & 1 & 1 & 1 & 0 \\ 0 & 0 & 1 & 1 & 0 & 1 \end{pmatrix} \quad \text{et} \quad \begin{pmatrix} 0 & 1 & 0 & 0 & 1 & 1 \\ 1 & 1 & 0 & 1 & 0 & 0 \\ 1 & 0 & 1 & 0 & 1 & 1 \\ 0 & 1 & 1 & 1 & 0 & 0 \\ 1 & 0 & 1 & 0 & 1 & 0 \\ 0 & 0 & 1 & 0 & 1 & 1 \end{pmatrix}$$

par rapport à la base $(1, X, X^2, X^3, X^4, X^5)$ de $L$ sur $F_2$ et à la base canonique de $(F_2)^6$ sur $F_2$, on obtient la bijection quadratique φ de 6 bits sur 6 bits suivante :

$$\varphi(u_1, u_2, u_3, u_4, u_5, u_6) =$$
$$(u_2u_5 \oplus u_1u_4 \oplus u_4 \oplus u_5 \oplus u_6u_2 \oplus u_4u_6 \oplus u_2 \oplus u_5 \oplus u_3 \oplus u_4u_3,$$
$$u_2u_5 \oplus u_5u_1 \oplus u_1u_4 \oplus u_4 \oplus u_6 \oplus u_4u_5 \oplus u_2 \oplus u_3 \oplus u_3u_1,$$

$$u_2u_5 \oplus u_5u_1 \oplus u_6u_5 \oplus u_1u_4 \oplus u_3u_5 \oplus u_1 \oplus u_4u_6 \oplus u_6u_3 \oplus u_4u_3 \oplus$$

$$u_3u_1 ,$$

$$u_1u_4 \oplus u_2u_3 \oplus u_6u_1 \oplus u_4u_6 \oplus u_5 \oplus u_6u_3 \oplus u_4u_3 ,$$

$$u_5u_1 \oplus u_1u_4 \oplus u_6 \oplus u_3u_5 \oplus u_4u_5 \oplus u_1 \oplus u_6u_1 \oplus u_4u_6 \oplus u_3 \oplus u_6u_3$$

$$\oplus u_4u_2 ,$$

$$u_4 \oplus u_6 \oplus u_3u_5 \oplus u_1 \oplus u_4u_6 \oplus u_6u_3) .$$

Pour calculer $\varphi(v_1 \oplus, v_2)$, on utilise la fonction $\psi(x, y)=t(s(x)^4 \cdot s(y))$ de 12 bits sur 6 bits, qui donne les 6 bits de sortie en fonction des 12 bits d'entrée selon les règles suivantes :

$$\psi(x_1 , x_2 , x_3 , x_4 , x_5 , x_6 , y_1 , y_2 , y_3 , y_4 , y_5 , y_6)=$$

$$(x_3y_5 \oplus x_6y_2 \oplus x_6y_3 \oplus x_6y_4 \oplus x_3y_1 \oplus x_6y_1 \oplus x_1y_3 \oplus x_1y_5 \oplus x_5y_2$$

$$\oplus x_5y_5 \oplus x_5y_1 \oplus x_6y_6 \oplus x_1y_6 \oplus x_1y_2 \oplus x_1y_4 \oplus x_2y_1 \oplus x_2y_2 \oplus x_4y_4$$

$$\oplus x_3y_3 \oplus x_3y_5 \oplus x_4y_3 \oplus x_5y_3 ,$$

$$x_4y_5 \oplus x_3y_1 \oplus x_6y_1 \oplus x_2y_5 \oplus x_5y_1 \oplus x_6y_6 \oplus x_1y_6 \oplus x_1y_2 \oplus x_2y_1 \oplus$$

$$x_2y_2 \oplus x_4y_1 \oplus x_4y_4 \oplus x_3y_3 ,$$

$$x_6y_2 \oplus x_6y_3 \oplus x_6y_4 \oplus x_6y_5 \oplus x_3y_1 \oplus x_5y_1 \oplus x_2y_5 \oplus x_5y_1 \oplus x_1y_6 \oplus$$

$$x_1y_1 \oplus x_1y_2 \oplus x_1y_4 \oplus x_2y_1 \oplus x_2y_4 \oplus x_4y_2 \oplus x_2y_6 \oplus x_3y_4 \oplus x_5y_3 ,$$

$$x_3y_1 \oplus x_6y_2 \oplus x_2y_6 \oplus x_5y_3 \oplus x_5y_4 \oplus x_5y_6 \oplus x_6y_3 \oplus x_2y_3 \oplus x_4y_6 \oplus$$

$$x_6y_5 \oplus x_1y_3 \oplus x_5y_5 \oplus x_2y_4 \oplus x_4y_2 \oplus x_4y_5 \oplus x_3y_5 \oplus x_4y_3 \oplus x_6y_1 \oplus$$

$$x_4y_1 ,$$

$$x_3y_1 \oplus x_6y_6 \oplus x_5y_3 \oplus x_5y_6 \oplus x_5y_2 \oplus x_1y_5 \oplus x_1y_1 \oplus x_1y_2 \oplus x_2y_1 \oplus$$

$$x_2y_3 \oplus x_3y_6 \oplus x_5y_5 \oplus x_1y_3 \oplus x_2y_4 \oplus x_3y_3 \oplus x_4y_5 \oplus x_2y_5 \oplus x_6y_1 \oplus$$

$$x_4y_1 \oplus x_6y_4 \oplus x_3y_2 ,$$

$$x_6y_6 \oplus x_4y_4 \oplus x_5y_4 \oplus x_5y_6 \oplus x_6y_3 \oplus x_1y_6 \oplus x_1y_1 \oplus x_1y_2 \oplus x_2y_1$$

$$\oplus x_6y_5 \oplus x_2y_4 \oplus x_4y_2 \oplus x_4y_5 \oplus x_3y_5 \oplus x_5y_1 \oplus x_6y_4) .$$

En utilisant ces formules, on calcule successivement :

- $\psi(v_1, v_1)$ ;
- $\psi(v_1, v_2)$ ;
- $\psi(v_2, v_1)$ ;
- $\psi(v_2, v_2)$.

Puis on calcule le *"OU-exclusif"* des quatre résultats obtenus.

**Variante n°3 :**

Toujours pour réduire la taille ROM nécessaire pour stocker les boîtes S, on peut enfin appliquer simultanément les idées des deux variantes précédentes, Variante n°1 et Variante n°2 : on utilise la Variante 2, avec la même bijection secrète φ (de 6 bits vers 6 bits) et la même fonction aléatoire secrète A (de 6 bits vers 6 bits) dans la nouvelle implémentation de chaque transformation non-linéaire donnée sous la forme d'une boîte-S.

**Variante n°4 :**

Dans cette dernière variante, au lieu de mettre en oeuvre la transformation $(v'_1,v'_2)=S'(v_1,v_2)$, au moyen de deux boîtes S, qui remplace la transformation non-linéaire $v'=S(v)$ de la mise en oeuvre initiale, qui était donnée sous la forme d'une boîte-S, on effectue le calcul de $v'_1$ respectivement $v'_2$ au moyen d'une fonction algébrique simple, pour laquelle les bits de $v'_1$ respectivement $v'_2$ sont donnés par une fonction polynomiale de degré total 1 ou .2 des bits de $v_1$ et $v_2$, puis on calcule $v'_2$ respectivement $v'_1$ au moyen d'une table. Cela permet encore de réduire la taille de la mémoire ROM nécessaire pour l'exécution matérielle.

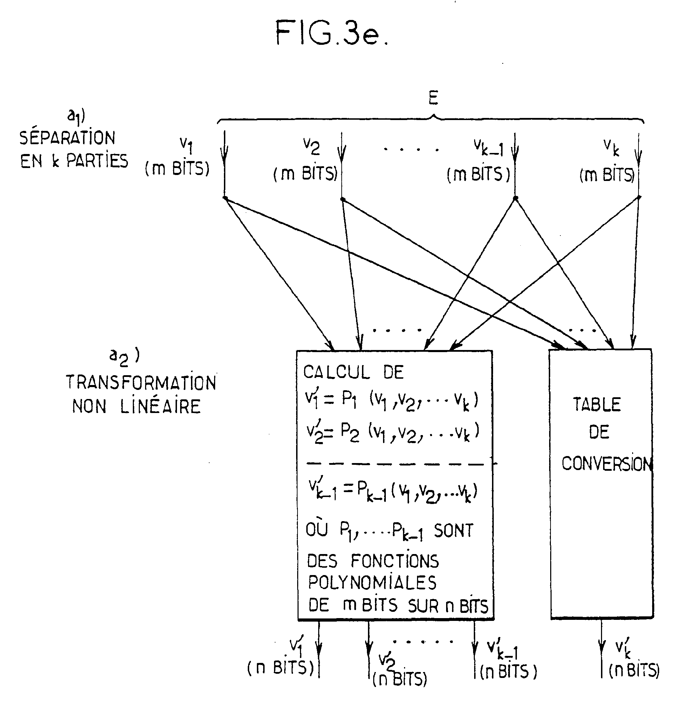

Ainsi que représenté en figure 3e, dans le cas d'une étape de calcul du type transformation non linéaire mise en oeuvre par un processus de calcul cryptographique classique, tel que le DES, outre la division en k parties $v_1$ à $v_k$ d'une variable intermédiaire jouant le rôle d'entrée E, les transformations non linéaires consistent pour le processus classique, de même que dans le cas des figures 3b et 3d, en une transformation non linéaire de m bits sur n bits, décrite par des tables de conversion dans lesquelles les n bits de sortie de la transformation sont lus à une adresse fonction des m bits d'entrée, selon le procédé objet de l'invention, on remplace chaque transformation non linaire appliquée à une variable intermédiaire du processus de calcul cryptographique classique, en l'absence de division, par une transformation non linéaire partielle de km bits sur kn bits appliquée sur l'ensemble des variables intermédiaires partielles $v_1$ à $v_k$. Dans ce cas, et en référence à la Variante n°4 de l'exemple 2 précité, (k-1)n bits de sortie de cette transformation sont calculés comme une fonction polynomiale des km bits d'entrée des variables $v_1$, $v_2$ ... $v_k$ selon les relations :

$$v'_1 = P_1(v_1, v_2, \ldots v_k)$$

$$\vdots$$

$$v'_{k-1} = P_{k-1}(v_1, v_2, \ldots v_k),$$

relations dans lesquelles $P_1$ à $P_{k-1}$ désignent des fonctions polynomiales de m bits sur n bits.

Les n bits restants $v'_k$ de la variable de sortie sont alors obtenus, par exemple, par la lecture d'une table de conversion non linéaire dans laquelle ces n bits sont lus à une adresse qui est fonction des km bits d'entrée.

Dans la Variante n°4 de l'exemple précité, on rappelle que k=2, m=6 et n=4.

**Deuxième exemple** : le Triple-DES

Le Triple-DES consiste à effectuer séquentiellement des opérations de chiffrement/déchiffrement à partir de deux clés secrètes.

Pour une description de l'algorithme Triple-DES, on pourra utilement se reporter à l'un des documents suivants :

• ISO/IEC 8732:1987, *Banking - Key Management (Wholesale);*
• ANSI X9.17, *American National Standard, Financial Institution Key Management (Wholesale),* 1985.

ou encore dans l'ouvrage suivant :

• Bruce Schneier, Applied Cryptography, 2ème édition, John Wiley & Sons, 1996, page 358,

lesquels sont introduits dans la présente demande à titre de référence.

Le principe consiste à utiliser le DES trois fois de suite pour chiffrer un message : on commence par effectuer un DES en mode chiffrement avec la clé n°1, puis un DES en mode déchiffrement avec la clé n°2, et enfin un DES en mode chiffrement à nouveau avec la clé n°1. L'attaque de type DPA est possible de la même manière que pour le DES :

grâce aux mesures de consommation effectuées sur le premier tour du premier DES, on trouve 48 bits de la clé n°1, puis en considérant le deuxième tour, on trouve les 8 bits restants de la clé n°1. Connaissant la clé n°1, on connaît alors les entrées du deuxième DES, et on peut appliquer la même attaque pour trouver la clé n°2.

La sécurisation de l'algorithme peut s'opérer exactement comme dans le cas du simple DES décrit dans le premier exemple ci-dessus : on utilise la même fonction *f* pour effectuer la *"division,"* des variables intermédiaires, et les mêmes transformations de l'algorithme.

**Revendications**

1. Procédé de sécurisation d'un ensemble électronique mettant en oeuvre un processus de calcul cryptographique symétrique qui utilise une clé secrète, **caractérisé en ce que** :

   a) l'on divise le processus de calcul cryptographique symétrique en plusieurs parties de processus de calcul distinctes conduites parallèlement et mettant en oeuvre des résultats partiels intermédiaires distincts de ceux du calcul cryptographique symétrique ;
   b) on reconstitue la valeur finale obtenue par le calcul cryptographique symétrique en l'absence de division, à partir desdits résultants partiels intermédiaires distincts.

2. Procédé selon la revendication 1, **caractérisé en ce que** chaque variable ou résultat *(v)* intermédiaire dépendant des données d'entrée ou de sortie mises en oeuvre par le processus de calcul cryptographique symétrique est remplacé par un nombre déterminé *k* de variables intermédiaires partielles $(v_1, ..., v_k)$, les variables intermédiaire *(v)* et intermédiaires partielles $(v_1$ à $v_k)$ étant liées par une fonction *f*, $v=f(v_1, v_2, ..., v_k)$ permettant la reconstitution de ladite variable intermédiaire *(v)*.

3. Procédé selon la revendication 2, **caractérisé en ce que** ladite fonction *f*, liant les variables intermédiaires partielles et ladite variable intermédiaire (*v*), est telle que la connaissance d'une valeur de cette variable intermédiaire ne permet jamais de déduire l'ensemble des valeurs particulière partielles $v_i$ telles qu'il existe un *(k-1)-uplet* $(v_1, ..., v_{i-1}, v_{i+1} ... v_k)$ satisfaisant à l'équation $f(v_1, ..., v_i, ..., v_k) = v$.

4. Procédé selon la revendication 3, **caractérisé en ce que** ladite fonction est la fonction *"OU-exclusif"* bit à bit, lesdites variable intermédiaire *(v)* et variables intermédiaires partielles $(v_1, ..., v_i, ..., v_k)$ vérifiant la relation :

$$f(v_1, ..., v_i, ..., v_k) = v_1 \oplus v_2 \oplus, ... \oplus v_i \oplus v_k.$$

5. Procédé selon la revendication 3, **caractérisé en ce que** pour une variable intermédiaire *(v)* à valeurs dans le groupe multiplicatif $Z/nZ$ défini par l'ensemble des entiers modulo *n*, ladite fonction est la fonction produit modulo *n*, $f(v_1, ..., v_k)=v_1, v_2,..v_k$ modulo *n*, dans laquelle lesdites variables intermédiaires partielles sont des variables à valeurs dans ledit groupe multiplicatif de $Z/nZ$.

6. Procédé selon la revendication 3, **caractérisé en ce que**, ladite fonction *f* liant les variables intermédiaires partielles et ladite variable intermédiaire *(v)*, les parties de processus de calcul distinctes conduites parallèlement sont indépendantes, lesdites parties de processus de calcul distinctes conduites parallèlement étant conduites en l'absence de reconstitution de ladite variable intermédiaire *(v)* dépendant des données d'entrée ou de sortie mise en oeuvre par ledit processus de calcul cryptographique symétrique.

7. Procédé selon la revendication 1, **caractérisé en ce que** ladite division est effectuée en deux parties distinctes conduites parallèlement.

8. Procédé selon la revendication 1, **caractérisé en ce que** ladite division est effectuée en k parties, et **en ce que**, pour un processus de calcul cryptographique symétrique utilisant des transformations non linéaires de *m* bits sur *n* bits décrites par des tables de conversion, dans lesquelles les *n* bits de sortie de la transformation sont lus à une adresse fonction des *m* bits d'entrée, on remplace chaque transformation non linéaires appliquée à une variable intermédiaire du processus de calcul cryptographique symétrique en l'absence de division, par une transformation non linéaire partielle de *km* bits sur *kn* bits appliquée à l'ensemble des variables intermédiaires partielles, cette transformation non linéaire partielle étant décrite par *k* tables de conversion partielle dans lesquelles les *n* bits de sortie de la transformation sont lus à une adresse fonction des *km* bits d'entrée.

9. Procédé selon la revendication 8, **caractérisé en ce que** parmi les *k* tables de conversion partielle *k-1* tables de conversion partielle contiennent des variables aléatoires secrètes.

10. Procédé selon la revendication 8, **caractérisé en ce que** parmi les *k* tables de conversion partielle, utilisées pour remplacer chaque table de conversion non linéaire, on utilise à chaque fois les mêmes *k-1* tables aléatoires secrètes.

11. Procédé selon la revendication 1, **Caractérisé en ce que** ladite division est effectuée en k parties, et **en ce que**, pour un processus de calcul cryptographique symétrique utilisant des transformation non linéaires de *m* bits sur *n* bits décrites par des tables de conversion dans lesquelles les *n* bits de sortie de la transformation sont lus à une adresse fonction des *m* bits d'entrée, on remplace chaque transformation non linéaire appliquée à une variable intermédiaire du processus de calcul cryptographique symétrique, en l'absence de division, par une transformation non linéaire partielle de *km* bits sur *kn* bits appliquée sur l'ensemble des variables intermédiaires partielles, *(k-1)n* desdits bits de sortie de cette transformation étant calculés comme fonction polynomiale des *km* bits d'entrée et les *n* bits restants desdits bits de sortie étant obtenus par lecture d'une table de conversion dans laquelle les *n* bits restants sont lus à une adresse qui est fonction des *km* bits d'entrée.

12. Procédé selon la revendication 2, **caractérisé en ce que** ladite division est effectuée en k parties, et **en ce que**, pour un processus de calcul cryptographique symétrique utilisant des transformations non linéaires de *m* bits sur *n* bits décrites par des tables de conversion dans lesquelles les *n* bits de sortie de la transformation sont lus à une adresse fonction des *m* bits d'entrée, on remplace chaque transformation non linéaire appliquée à une variable intermédiaire du processus de calcul cryptographique symétrique, en l'absence de division, par une transformation non linéaire partielle de *km* bits sur *kn* bits appliquée sur l'ensemble des variables intermédiaires partielles, cette transformations non linéaire partielle étant décrite par k tables de conversion, chacune de ces tables de conversion recevant comme entrée une valeur obtenue par application d'une fonction bijective secrète $\varphi_1$ à ladite fonction f $(v_1, ..., v_k)$ des variables intermédiaires partielles selon la relation $\varphi_j$ o $f(v_1, ..., v_k)$, $j \in [1, k]$, cette application $\varphi_j$ o f $(v_1, ..., v_k)$ étant effectuée par évaluation directe d'une valeur résultante, cette valeur résultante, appliquée à l'entrée de la table de conversion, permettant de lire *n* bits de sortie de la transformation à une adresse qui est fonction de ces *m* bits d'entrée.

13. Procédé selon la revendication 12, **caractérisé en ce que**, parmi les k tables de conversion partielle, k-1 tables de conversion partielle contiennent des valeurs aléatoires secrètes.

14. Procédé selon la revendication 12, **caractérisé en ce que**, parmi les k tables de conversion partielle utilisées pour remplacer chaque table de transformation non linéaire, on utilise à chaque fois les mêmes k-1 tables de conversion aléatoires secrètes.

15. Procédé selon la revendication 1, **caractérisé en ce que** les opérations effectuées dans les différentes parties issues de la division du processus de calcul cryptographique en plusieurs parties de processus de calcul distinctes sont exécutées séquentiellement.

16. Procédé selon la revendication 1, **caractérisé en ce que** les opérations effectuées dans les différentes parties issues de la division du processus de calcul cryptographique en plusieurs parties de processus de calcul distinctes sont exécutées de façon imbriquée.

17. Procédé selon la revendication 1, **caractérisé en ce que** les opérations effectuées dans les différentes parties issues de la division du processus de calcul cryptographique en plusieurs parties de processus de calcul distinctes sont exécutées de façon simultanée dans le cas de la multiprogrammation.

18. Procédé selon la revendication 1, **caractérisé en ce que** les opérations effectuées dans les différentes parties issues de la division du processus de calcul cryptographique en plusieurs parties de processus de calcul distinctes sont exécutées simultanément dans des processeurs différents travaillant en parallèle.

19. Utilisation du procédé selon la revendication 1 dans une carte à microcalculateur.

20. Utilisation du procédé selon la revendication 1 pour la sécurisation de processus de calcul cryptographique supporté par les algorithmes DES, Triple DES.

## Claims

1. Process of protecting an electronic unit by implementing a symmetric cryptography computing process, in which a key is used and **characterised in that**

   a. the symmetric cryptography computing process is divided into several different computing process parts which run in parallel and which provide partial intermediate results differing from those of the symmetric cryptography computing process.

   b. the final value resulting from the non-divided symmetric cryptography computing process is reconstructed on the basis of the aforementioned different partial intermediate results.

2. Process in accordance with Claim 1, **characterised in that** each intermediate variable or result ($v$) which is dependent on the input or output data used by the symmetric cryptography computing process is replaced by a given number $k$ of partial intermediate variables ($v_1$, ..., $v_k$), with the intermediate variables ($v$) and the partial intermediate variables ($v_1$ to $v_k$) being linked by a function $f$, $v=f(v_1, v_2, ..., v_k)$, enabling the reconstruction of the aforementioned intermediate variable ($v$).

3. Process in accordance with Claim 2, **characterised in that** the aforementioned function $f$ linking the partial intermediate variables and the aforementioned intermediate variable ($v$) is such that it is never possible to deduce, from the knowledge of a value of that intermediate variable, the set of the individual partial values $v_i$ such that there is a $(k-1)$-tuple ($v_1$, ..., $v_{i-1}$, $v_{i+1}$ ... $v_k$) fulfilling the equation $f(v_1, ..., v_i, ..., v_k) = v$.

4. Process in accordance with Claim 3, **characterised in that** the aforementioned function is the "exclusive OR" bit by bit function, the aforementioned intermediate variable ($v$) and the aforementioned partial intermediate variables ($v_1$, ..., $v_i$, ..., $v_k$) fulfilling the following relation:

$$f (v_1, ..., v_i, ..., v_k) = v_1 \oplus v_2 \oplus , ..., \oplus v_i, \oplus v_k.$$

5. Process in accordance with Claim 3, **characterised in that**, for an intermediate variable ($v$) valued in terms of the $Z/nZ$ multiplicative group defined by the group of modulo $n$ integers, the aforementioned function is the modulo $n$ product function $f(v_i, ..., v_k) = v_1, v_2, ..., v_k$, in which the aforementioned partial intermediate variables are variables valued in terms of the aforementioned $Z/nZ$ multiplicative group.

6. Process in accordance with Claim 3, **characterised in that**, with the aforementioned function $f$ linking the partial intermediate variables and the aforementioned intermediate variable ($v$), the parts of the computing process running in parallel, separately from each other, are independent, and that the aforementioned different parts of the computing process running in parallel are being run without reconstructing the aforementioned intermediate variable ($v$) dependent on the input and output data implemented in the aforementioned symmetric cryptography computing process.

7. Process in accordance with Claim 1, **characterised in that** the aforementioned subdivision is executed in two distinct parts running in parallel.

8. Process in accordance with Claim 1, **characterised in that** the subdivision is executed in $k$ parts and **in that**, for a symmetric cryptography computing process using non-linear transformations from $m$ bits to $n$ bits which are outlined by conversion tables in which the $n$ output bits of the transformation are read by an address function of the $m$ input bits, all non-linear transformations applied to an intermediate variable of the non-divided symmetric cryptography computing process without subdivision are replaced by a non-linear partial transformation of $km$ bits to $kn$ bits applied to the groups of partial intermediate variables, this non-linear partial transformation being outlined in $k$ partial conversion tables in which the $n$ output bits of the transformation are read by an address function of the $km$ input bits.

9. Process in accordance with Claim 8, **characterised in that** amongst the $k$ partial conversion tables, $k-1$ partial conversion tables contain random secret variables.

10. Process in accordance with Claim 8, **characterised in that**, amongst the $k$ partial conversion tables, which are used for replacing each non-linear conversion table, the same $k-1$ random and secret tables are used in every case.

11. Process in accordance with Claim 1, **characterised in that** the aforementioned division is executed in $k$ parts and **in that**, for a symmetric cryptography computing process using non-linear transformations of $m$ bits to $n$ bits outlined by the conversion tables in which $n$ output bits of the transformation are read by an address function of $m$ input bits, each non-linear transformation applied to an intermediate variable of the non-divided symmetric cryptography computing process is replaced by a non-linear partial transformation of $km$ bits to $kn$ bits applied to the group of partial intermediate variables, the *(k-l)n* of the said output bits of this transformation being computed as a polynomial function of the $km$ input bits and the $n$ remaining bits of the said output bits being obtained by the reading of a conversion table in which the $n$ remaining bits are read by an address which is the function of the $km$ input bits.

12. Process in accordance with Claim 1, **characterised in that** the aforementioned division is executed in $k$ parts and **in that**, for a symmetric cryptography computing process using non-linear transformations of $m$ bits to $n$ bits outlined in conversion tables in which $n$ output bits of the transformation are read by an address function of $m$ input bits, each non-linear transformation applied to an intermediate variable of the non-divided symmetric cryptography computing process is replaced by a non-linear partial transformation of $km$ bits to $kn$ bits applied to the group of partial intermediate variables, this partial non-linear transformation being outlined by $k$ conversion tables each of which receiving a value obtained by application of a $\varphi_1$ secret bijective function as input to the aforementioned $f(v_1, ..., v_k)$ function of the partial intermediate variables according to the relation $\varphi_j o\ f(v_1, ..., v_k),\ j \in\ [l,\ k]$, this $\varphi_j\ o\ f(v_1, ..., v_k)$ application being executed by direct evaluation of a resulting value and this resulting value, applied to the input of the conversion table, allowing for the reading of $n$ output bits of the transformation at an address which is the function of these $m$ input bits.

13. Process in accordance with Claim 12, **characterised in that**, among the $k$ partial conversion tables, $k-1$ partial conversion tables contain random secret values.

14. Process in accordance with Claim 12, **characterised in that**, amongst the $k$ partial conversion tables, which are used for replacing each non-linear conversion table, the same $k-1$ random and secret tables are used in every case.

15. Process in accordance with Claim 1, **characterised in that** the operations performed in the different parts resulting from the division of the cryptography computing process into several distinct parts of the computing process, are executed out sequentially.

16. Procedure in accordance with Claim 1, **characterised in that** the operations performed in the different parts resulting from the division of the cryptography computing process into several distinct computing process parts, are executed in an overlapping manner.

17. Procedure in accordance with Claim 1, **characterised in that** the operations performed in the different parts resulting from the division of the cryptography computing process into several distinct computing process parts are executed in parallel in the case of multiprogramming.

18. Procedure in accordance with Claim 1, **characterised in that** the operations performed in the different parts resulting from the division of the cryptography computing process into several distinct computing process parts are executed in parallel using several processors running in parallel.

19. Utilisation of the process in accordance with Claim 1 in a micro-computer card.

20. Utilisation of the process in accordance with Claim 1 for securing the cryptography computing process supported by the DES and Triple DES algorithms.

**Patentansprüche**

1. Verfahren zur Sicherung einer elektronischen Baugruppe durch Verwendung eines kryptographischen, symmetrischen Rechenprozesses, bei dem ein geheimer Schlüssel verwendet wird, und das **dadurch gekennzeichnet ist, dass**

    a. der kryptographische, symmetrische Rechenprozess in mehrere, verschiedene Rechenprozessteile unterteilt wird, die parallel ablaufen und Teilzwischenergebnisse liefern, die sich von denen des kryptographischen, symmetrischen Rechenprozesses unterscheiden.

b. der sich aus dem nicht unterteilten kryptographischen, symmetrischen Rechenprozess ergebende Endwert auf Grundlage der genannten verschiedenen Teilzwischenergebnisse rekonstruiert wird.

2. Verfahren gemäß Anspruch 1, das **dadurch gekennzeichnet ist, dass** jede Zwischenvariable oder jedes Zwischenergebnis ($v$) in Abhängigkeit der für den kryptographischen, symmetrischen Rechenprozess verwendeten Eingangs- oder Ausgangsdaten durch eine bestimmte Anzahl $k$ von Teilzwischenvariablen ($v_1, ..., v_k$) ersetzt wird, wobei die Zwischenvariablen ($v$) und die Teilzwischenvariablen ($v_1$ bis $v_k$) durch eine Funktion $f$, $v = f(v_1, v_2, ..., v_k)$ verbunden sind, was die Rekonstruierung der genannten Zwischenvariablen ($v$) ermöglicht.

3. Verfahren gemäß Anspruch 2, das **dadurch gekennzeichnet ist, dass** die genannte Funktion $f$, die die Teilzwischenvariablen und die genannte Zwischenvariable ($v$) verbindet, so geartet ist, dass es durch Bekanntsein eines Wertes dieser Zwischenvariable nie möglich ist, die Gesamtheit der einzelnen Teilwerte $v_i$ abzuleiten, sodass es ein $(k-1)$-Tupel ($v_i, ..., v_{1-1}, v_{1+1}, ... v_k$) gibt, das die Gleichung $f(v_1, ..., v_1, ..., v_k) = v$ erfüllt.

4. Verfahren gemäß Anspruch 3, das **dadurch gekennzeichnet ist, dass** es sich bei der genannten Funktion um die "exklusives ODER"-Bit-by-Bit-Funktion handelt, wobei die genannte Zwischenvariable ($v$) und die genannten Teilzwischenvariablen ($v_1, ..., v_1, ..., v_k$) folgende Relation erfüllen:

$$f(v_1, ..., v_1, ..., v_k) = v_1 \oplus v_2 \oplus, ..., \oplus v_1, \oplus v_k.$$

5. Verfahren gemäß Anspruch 3, das **dadurch gekennzeichnet ist, dass** für eine Zwischenvariable ($v$) mit Werten der durch die Gesamtheit der ganzen Zahlen modulo $n$ definierten Multiplikationsgruppe $Z/nZ$ die genannte Funktion die Produktfunktion modulo $n$, $f(v_i, ..., v_k) = v_1, v_2, ..., v_k$ modulo $n$ ist, bei deren Teilzwischenvariablen es sich um Variablen handelt, deren Werte zur Multiplikationsgruppe $Z/nZ$ gehören.

6. Verfahren gemäß Anspruch 3, das **dadurch gekennzeichnet ist, dass** die genannte Funktion $f$ die Teilzwischenvariablen und die genannte Zwischenvariable ($v$) verbindet, die verschiedenen, parallel ausgeführten Teile des Rechenprozesses voneinander unabhängig sind und die genannten verschiedenen, ohne Rekonstruierung der genannten Zwischenvariablen ($v$) parallel ausgeführten Teile des Rechenprozesses von den Eingangs- oder Ausgangsdaten abhängig sind, die bei dem genannten kryptographischen, symmetrischen Rechenprozess verwendet werden.

7. Verfahren gemäß Anspruch 1, das **dadurch gekennzeichnet ist, dass** es sich bei der genannten Unterteilung um eine Unterteilung in zwei verschiedene, parallel durchgeführte Teile handelt.

8. Verfahren gemäß Anspruch 1, das **dadurch gekennzeichnet ist, dass** es sich bei der genannten Unterteilung um eine Unterteilung in $k$ Teile handelt, und dass bei einem kryptographischen, symmetrischen Rechenprozess, bei dem nicht-lineare Transformationen von $m$ Bits zu $n$ Bits angewendet werden, die in Umrechnungstabellen beschrieben sind, in denen die $n$ Ausgangsbits der Transformation von einer Adressfunktion der $m$ Eingangsbits gelesen werden, alle auf eine Zwischenvariable des nicht unterteilten kryptographischen, symmetrischen Rechenprozesses angewendeten nicht-linearen Transformationen durch eine nicht-lineare, auf die Gesamtheit der Teilzwischenvariablen angewendete Teiltransformation von $km$ Bits auf $kn$ Bits ersetzt werden, wobei diese nicht-lineare Teiltransformation in $k$ Teilumrechnungstabellen beschrieben ist, in denen die $n$ Ausgangsbits der Transformation von einer Adressfunktion der $km$ Eingangsbits gelesen werden.

9. Verfahren gemäß Anspruch 8, das **dadurch gekennzeichnet ist, dass** von den $k$ Teilumrechnungstabellen $k-1$ Teilumrechnungstabellen zufällige, geheime Variablen enthalten.

10. Verfahren gemäß Anspruch 8, das **dadurch gekennzeichnet ist, dass** von den $k$ Teilumrechnungstabellen, die dazu verwendet werden, jede nicht-lineare Umrechnungstabelle zu ersetzen, jedes Mal die selben $k-1$ zufälligen, geheimen Tabellen verwendet werden.

11. Verfahren gemäß Anspruch 1, das **dadurch gekennzeichnet ist, dass** die bereits erwähnte Unterteilung in $k$ Teile durchgeführt wird, und dass bei einem kryptographischen, symmetrischen Rechenprozess, bei dem nicht-lineare Transformationen von $m$ Bits zu $n$ Bits angewendet werden, die in Umrechnungstabellen beschrieben sind, in denen die $n$ Ausgangsbits der Transformation von einer Adressfunktion der $m$ Eingangsbits gelesen werden, alle auf eine Zwischenvariable des nicht unterteilten kryptographischen, symmetrischen Rechenprozesses angewendeten nicht-linearen Transformationen durch eine nicht-lineare, auf die Gesamtheit der Teilzwischenvariablen angewendete Teiltransformation von $km$ Bits auf $kn$ Bits ersetzt werden, wobei $(k-1)n$ der genannten Ausgangsbits dieser Transformation als Polynomfunktion aus den $km$ Eingangsbits und den $n$ verbleibenden der genannten Ausgangsbits berechnet werden, die aus einer Umrechnungstabelle gelesen werden können, in der die $n$ verbleibenden Bits von einer Adresse gelesen werden, die die Funktion der $km$ Eingangsbits ist.

12. Verfahren gemäß Anspruch 2, das **dadurch gekennzeichnet ist, dass** die bereits erwähnte Unterteilung in $k$ Teile durchgeführt wird und dass bei einem kryptographischen, symmetrischen Rechenprozess, bei dem nicht-lineare Transformationen von $m$ Bits zu $n$ Bits angewendet werden, die in Umrechnungstabellen beschrieben sind, in denen die $n$ Ausgangsbits der Transformation von einer Adressfunktion der $m$ Eingangsbits gelesen werden, alle auf eine Zwischenvariable des nicht unterteilten kryptographischen, symmetrischen Rechenprozesses angewendeten nicht-linearen Transformationen durch eine nicht-lineare, auf die Gesamtheit der Teilzwischenvariablen angewendete Teiltransformation von $km$ Bits auf $kn$ Bits ersetzt werden, wobei diese nicht-lineare Teiltransformation in $k$ Umrechnungstabellen beschrieben ist, von denen jede als Eintrag einen Wert erhält, der sich durch Anwendung einer geheimen bijektiven Funktion $\varphi_1$ auf die genannte Funktion $f(v_1, ..., v_k)$ aus den Teilzwischenvariablen im Verhältnis $\varphi_j \circ f(v_1, ..., v_k), j \in [l, k]$ ergibt, wobei bei der Durchführung dieser Anwendung $\varphi_j \circ f(v_1, ..., v_k)$ ein sich ergebender Wert direkt ausgewertet wird und dieser sich ergebende Wert es durch Anwendung auf den Eintrag in der Umrechnungstabelle erlaubt, von einer Adresse, die die Funktion dieser $m$ Eingangsbits ist, $n$ Ausgangsbits der Transformation zu lesen.

13. Verfahren gemäß Anspruch 12, das **dadurch gekennzeichnet ist, dass** von den $k$ Teilumrechnungstabellen $k-1$ Teilumrechnungstabellen zufällige, geheime Variablen enthalten.

14. Verfahren gemäß Anspruch 12, das **dadurch gekennzeichnet ist, dass** von den $k$ Teilumrechnungstabellen, die dazu verwendet werden, jede nicht-lineare Umrechnungstabelle zu ersetzen, jedes Mal die selben $k-1$ zufälligen, geheimen Tabellen verwendet werden.

15. Verfahren gemäß Anspruch 1, das **dadurch gekennzeichnet ist, dass** die in den verschiedenen durch die Unterteilung des kryptographischen, symmetrischen Rechenprozesses in mehrere Rechenprozessteile entstandenen Teilen durchgeführten Operationen nacheinander ausgeführt werden.

16. Verfahren gemäß Anspruch 1, das **dadurch gekennzeichnet ist, dass** die in den verschiedenen durch die Unterteilung des kryptographischen, symmetrischen Rechenprozesses in mehrere Rechenprozessteile entstandenen Teilen durchgeführten Operationen so ausgeführt werden, dass sie einander überschneiden.

17. Verfahren gemäß Anspruch 1, das **dadurch gekennzeichnet ist, dass** die in den verschiedenen durch die Unterteilung des kryptographischen, symmetrischen Rechenprozesses in mehrere Rechenprozessteile entstandenen Teilen durchgeführten Operationen im Falle eines Mehrprogrammbetriebs gleichzeitig ausgeführt werden.

18. Verfahren gemäß Anspruch 1, das **dadurch gekennzeichnet ist, dass** die in den verschiedenen durch die Unterteilung des kryptographischen, symmetrischen Rechenprozesses in mehrere Rechenprozessteile entstandenen Teilen durchgeführten Operationen in mehreren, parallel laufenden Prozessoren gleichzeitig ausgeführt werden.

19. Verwendung des Verfahrens gemäß Anspruch 1 in einer Mikrorechnerkarte.

20. Verwendung des Verfahrens gemäß Anspruch 1 zur Sicherung des von den Algorithmen DES und Triple DES unterstützten kryptographischen Rechenprozesses.

ENTRÉE

IP

| $L_0$ | $R_0$ |
|---|---|

F — $K_1$

⊕ F

$1^{er}$ TOUR

| $L_1 = R_0$ | $R_1 = L_0 \oplus F(R_0, K_1)$ |
|---|---|

F — $K_2$

⊕ F

$2^{eme}$ TOUR

| $L_2 = R_1$ | $R_2 = L_1 \oplus F(R_1, K_2)$ |
|---|---|

| $L_{15} = R_{14}$ | $R_{15} = L_{14} \oplus F(R_{14}, K_{15})$ |
|---|---|

F — $K_{16}$

⊕ F

$16^{eme}$ TOUR

| $R_{16} = L_{15} \oplus F(R_{15}, K_{16})$ | $L_{16} = R_{15}$ |
|---|---|

$IP^{-1}$

SORTIE

# FIG.1a.

L'ALGORITHME DES (ART ANTÉRIEUR)

FIG.1b.
LA FONCTION F DU DES (ART ANTÉRIEUR)

FIG.2.

VALEUR D'ENTRÉE E
ET CLÉ SECRÈTE $K_S$

a ) SÉPARATION

$PPC_1$   $PPC_2$   $PPC_3$ . . . $PPC_{k-1}$   $PPC_k$

$v_1$   $v_2$   $v_3$   $v_{k-1}$   $v_k$

b) RECONSTITUTION   $V = f(v_1, v_2, \ldots v_{k-1}, v_k)$

V

E

$a_1$) SÉPARATION
k PARTIES

$v_1$
(mBITS)   $v_2$
(mBITS)   . . . .   $v_{k-1}$
(mBITS)   $v_k$
(mBITS)

$a_2$) TRANSFORMATIONS
NON LINÉAIRES
PARTIELLES

TABLE
n°1   TABLE
n° 2   . . . .   TABLE
n°(k−1)   TABLE
n° k

$v'_1$
(n BITS)   $v'_2$
n(BITS)   . . . .   $v'_{k-1}$
n(BITS)   $v'_k$
n(BITS)

FIG.3b.

V

S

$$v' = S(v)$$

PROCESSUS CLASSIQUE

$v_1$     $v_2$

$S'_1$     $S'_2$

$$v'_1 = A(v_1, v_2)$$     $$v'_2 = S(v_1 \oplus v_2) \oplus A(v_1, v_2)$$

PROCESSUS MODIFIÉ

# FIG. 3a.

TRANSFORMATION D'UNE BOITE S

$$v' = S(v)$$

PROCESSUS CLASSIQUE

CALCUL DE

$$v_0 = \varphi(v_1 \oplus v_2)$$

$$v_1' = A(v_0)$$

$$v_2' = S(\varphi^{-1}(v_0)) \oplus A(v_0)$$

PROCESSUS MODIFIÉ

# FIG.3c.

TRANSFORMATION D'UNE BOITE S ( VARIANTE N°2 )

FIG.3d.

$a_1$)
SÉPARATION
$k$ PARTIES

$a_2$)
TRANSFORMATION
NON LINÉAIRE

E

$v_1$ (m BITS)    $v_2$ (m BITS)    $v_{k-1}$ (m BITS)    $v_k$ (m BITS)

CALCUL DE
$\varphi_1 \circ f(v_1,...v_k)$
$\varphi_1$ FONCTION
BIJECTIVE
SECRÈTE
$b_1$

CALCUL DE
$\varphi_2 \circ f(v_1,...v_k)$
$\varphi_2$ FONCTION
BIJECTIVE
SECRÈTE
$b_2$

CALCUL DE
$\varphi_{k-1} \circ f(v_1,...v_k)$
$\varphi_{k-1}$ FONCTION
BIJECTIVE
SECRÈTE
$b_{k-1}$

CALCUL DE
$\varphi_k \circ f(v_1,...v_k)$
$\varphi_k$ FONCTION
BIJECTIVE
SECRÈTE
$b_k$

(m BITS)    (m BITS)    (m BITS)    (m BITS)

TABLE N°1    TABLE N°2    TABLE N°(k-1)    TABLE N°k

$v'_1$ (n BITS)    $v'_2$ (n BITS)    $v'_{k-1}$ (n BITS)    $v'_k$ (n BITS)

EP 1 068 695 B1

# FIG.3e.

$a_1$)
SÉPARATION
EN k PARTIES

E

$v_1$
(m BITS)

$v_2$
(m BITS)

· · · · ·

$v_{k-1}$
(m BITS)

$v_k$
(m BITS)

$a_2$)
TRANSFORMATION
NON LINÉAIRE

CALCUL DE
$v'_1 = P_1 (v_1, v_2, \ldots v_k)$
$v'_2 = P_2 (v_1, v_2, \ldots v_k)$
_ _ _ _ _ _ _
$v'_{k-1} = P_{k-1}(v_1, v_2, \ldots v_k)$
OÙ $P_1, \ldots P_{k-1}$ SONT
DES FONCTIONS
POLYNOMIALES
DE m BITS SUR n BITS

TABLE
DE
CONVERSION

$v'_1$
(n BITS)

$v'_2$
(n BITS)

· · · · ·

$v'_{k-1}$
(n BITS)

$v'_k$
(n BITS)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9852319 A

**Littérature non-brevet citée dans la description**

- Les attaques de type Analyse de Puissance Electrique, Power Analysis en langage anglo-saxon, développées par Paul Kocher et Cryptographic Research. **Paul Kocher ; Joshua Jaffe ; Benjamin Jun.** Introduction to Differential Power Analysis and related Attacks
- **Bruce Schneier.** Applied Cryptography. John Wiley & Sons, 1996, 270
- **Bruce Schneier.** Applied Cryptography. John Wiley & Sons, 1996, 358